# FASCICULE DE BREVET EUROPEEN

(11) **EP 0 655 845 B1**
(45) Date de publication et mention de la délivrance du brevet: **24.10.2001**
(21) Numéro de dépôt: 94402706.9
(22) Date de dépôt: 25.11.1994
(51) Int. Cl.: H04J 13/00

(54) **Système de transmission par paquets à étalement de spectre**
Paketübertragungsanordnung mit gespreiztem Spektrum
Spread spectrum packet transmission system

(30) Priorité: 30.11.1993 FR 9314309
(43) Date de publication de la demande: 31.05.1995
(73) Titulaire: Thales, 75008 Paris (FR)
(72) Inventeur: Ramel, Louis, F-92402 Courbevoie Cédex (FR)
(74) Mandataire: Dudouit, Isabelle

(56) Documents cités:
- EP-A- 0 486 834
- PROCEEDINGS OF THE 24TH ANNUAL ALLERTON CONFERENCE ON COMMUNICATION,CONTROL AND COMPUTING, 1 Octobre 1986, MONTICELLO (US) pages 540 - 549 MOHSEN SOROUSHNEJAD ET AL. 'Collision resolution algorithms for networks with spread-spectrum capture capability'
- PROCEEDINGS IEEE INFOCOM '86, 8 Avril 1986, MIAMI (US) pages 415 - 423 YITZAK BIRK ET AL. 'Code-assignment policies for multi-receiver nodes in CDMA packet radio networks.'
- ELECTRONICS LETTERS., vol.28, no.22, 1 Octobre 1992, STEVENAGE GB pages 2074 - 2075 J.C. WALKER ET AL. 'Network of 12 optical sensors using code-division multiplexing'

## Description

La présente invention concerne la transmission par paquets, sur fréquence porteuse, avec étalement-désétalement des données, entre plusieurs émetteurs et au moins un récepteur.

Quand plusieurs émetteurs ont à émettre des paquets en direction d'un ou plusieurs récepteurs, soit par voie hertzienne soit en utilisant des liaisons câblées dont certaines au moins peuvent acheminer des paquets ne provenant pas d'un seul émetteur, il existe un risque de recouvrement c'est-à-dire un risque d'avoir deux paquets qui, au moins pour une partie de leurs durées respectives, atteignent simultanément un récepteur et du fait de caractéristiques similaires ne peuvent être séparés l'un de l'autre ; un tel recouvrement, plus ou moins complet, est généralement appelé collision ou interférence entre paquets.

Pour réduire les risques de collision, différentes techniques sont connues qui consistent à rendre les paquets orthogonaux entre eux, c'est-à-dire à leur donner, à l'émission, des caractéristiques suffisamment différentes d'un émetteur à l'autre pour que les paquets puissent être séparés à la réception. Ainsi il est connu de faire que les différents émetteurs émettent tous sur des fréquences porteuses différentes ; cette technique est appelée "Frequency Division Multiple Access" ou FDMA, dans la littérature anglo-saxonne, sa mise en oeuvre n'est pas toujours possible pour des questions de largeur de bande de fréquences disponible, voire des questions de prix de revient des récepteurs. Il est également connu d'émettre les paquets selon des codes d'étalement différents d'un émetteur à l'autre ; cette technique est appelée "Code Division Multiple Access" ou CDMA, dans la littérature anglo-saxonne. Une autre manière de réduire les risques de collisions est d'émettre en temps partagé avec les différents émetteurs ; cette technique" est appelée "Time Division Multiple Access" ou TDMA, dans la littérature anglo-saxonne, elle nécessite que les émetteurs et le ou les récepteurs travaillent tous en synchronisme et n'est donc pas commode d'emploi ; la demande de brevet européen 0486834 fait appel à cette technique du TDMA.. Ces trois techniques peuvent d'ailleurs être combinées pour rendre les paquets orthogonaux entre eux.

Dans PROCEEDINGS IEEE INFOCOM '86, 8 avril 1986, MIAMI (US), pages 415-423, l'article "Code-assignement policies for multireceiver nodes in CDMA packet radio networks" de YITZAK BIRD et al. divulgue (cf. page 416, col. 1, lignes 21-33) un procédé de transmission par paquets, sur fréquence porteuse, avec étalement-désétalement des données où les données sont transmises en forme de paquets de différentes durées, contenant un préambule et où le récepteur repère chaque paquet en surveillant uniquement ledit préambule. Ce document décrit une transmission de données de type CDMA où le préambule permet aux récepteurs de déterminer les paquets qui leur sont destinés mais ne diminue pas les risques de collision propres aux transmissions de données de type CDMA.

Dans PROCEEDINGS OF THE 24^{TH} ANNUAL ALLERTON CONFERENCE ON COMMUNICATION, CONTROL, AND COMPUTING, 1 Octobre 1986, MONTICELLO (US) pages 540-549, l'article "Collision resolution algorithms for networks with spread-spectrum capture capability" de MOHSEN SOROUSHNEJAD et al. divulgue un système de transmission par paquets avec étalement de spectre et capacité de capture. Le document décrit un récepteur capable de capturer un paquet parmi ceux lui arrivant dans un même intervalle de temps à condition qu'au moins l'un des paquets arrive au récepteur avec un décalage dans le temps par rapport aux autres paquets au moins égal à l'intervalle de capture (capture interval).

Préalablement à la réception de plusieurs émetteurs, un récepteur doit connaître les caractéristiques, dites étalements, propres à chacun des émetteurs, c'est-à-dire les caractéristiques qui correspondent aux fréquences porteuses et aux codes employés dans chaque émetteur et aux intervalles de temps alloués à chaque émetteur ; il en résulte que, pour avoir une bonne orthogonalité entre les paquets et un débit élevé de paquets, les protocoles de mise en oeuvre, tant à l'émission qu'à la réception des paquets, sont complexes.

La présente invention a pour but d'éviter ou, pour le moins, de réduire les inconvénients précités.

Ceci est obtenu, en particulier, en utilisant des paquets présentant tous le même étalement mais un étalement qui varie, en fonction de la position dans le paquet.

Plus précisément il est proposé, pour atteindre ce but, un procédé de transmission par paquets tel que décrit dans la revendication 1.

Il est également proposé, pour atteindre ce but, un émetteur tel que décrit dans la revendication 4 et un récepteur tel que décrit dans la revendication 5.

La présente invention sera mieux comprise et d'autres caractéristiques apparaîtront à l'aide de la description ci-après et des figures s'y rapportant qui représentent :
- les figures 1 à 3, des diagrammes destinés à illustrer des transmissions de paquets par le procédé selon l'invention,
- les figures 4 et 5, respectivement les schémas d'un émetteur et d'un récepteur pour la mise en oeuvre du procédé selon l'invention.

Pour faciliter la compréhension du procédé de transmission de paquets, sur fréquence porteuse, avec étalement-désétalement des données, dont il va être question dans ce qui suit, il est fait appel à la notion de paquet standard et de séquence de segments. Le paquet standard est considéré en cours de transmission et sa durée est au moins égale à durée du plus grand paquet à transmettre; de plus ce paquet standard est constitué d'une séquence de segments de données dans laquelle chaque segment a son étalement propre, les étalements de deux segments quels qu'ils soient étant toujours orthogonaux entre eux.

Selon le procédé tout paquet transmis a un étalement identique à celui du paquet standard tronqué constitué par la partie du paquet standard qui, mesurée à partir du début du paquet standard, a une durée égale à la durée du paquet transmis considéré ; bien entendu, dans le cas où le paquet transmis a une durée égale à celle du paquet standard, le paquet standard tronqué est constitué par le paquet standard lui-même.

Egalement selon le procédé, tout premier segment d'une séquence comporte au minimum un en-tête constitué par un champ de synchronisation dont la composition est la même quel que soit le paquet et quel que soit l'émetteur qui produit le paquet, du moins lors d'un processus de transmission entre plusieurs émetteurs et un ou plusieurs récepteurs. Ce premier segment, appelé segment préliminaire dans ce qui suit, peut ne comporter que l'en-tête, ou comporter aussi, à la suite de l'en-tête, ou l'adresse du ou des destinataires du paquet, voire d'autres informations pour le traitement, à la réception, du paquet. Ainsi, connaissant l'étalement du segment préliminaire de tout paquet émis, quel que soit le poste émetteur, un poste récepteur repèrera l'arrivée d'un paquet en n'ayant à surveiller que l'arrivée des segments préliminaires ; quand un tel repérage a lieu, il suffit au poste récepteur de se synchroniser de manière classique sur l'en-tête du segment préliminaire repéré pour tenant compte des étalements d'un paquet, adapter ses caractéristiques de réception à ces étalements afin de recevoir successivement tous les segments de la séquence de segments constituant le paquet. Bien entendu les risques de collision subsistent mais ils sont considérablement réduits puisque, en prenant le cas où tous les segments de la séquence sont de même durée, il ne peut y avoir collision entre deux paquets s'il n'y a pas eu collision entre leurs segments préliminaires.

De ce qui précède il ressort que les risques de collision seront d'autant plus réduits que les segments seront plus courts et que, sauf si des considérations de prix de revient ou de facilité de fonctionnement imposent une limite à ne pas dépasser en valeurs inférieures, ce sera la quantité d'informations à mettre dans le segment préliminaire et donc la durée de ce segment préliminaire qui déterminera les risques de collision.

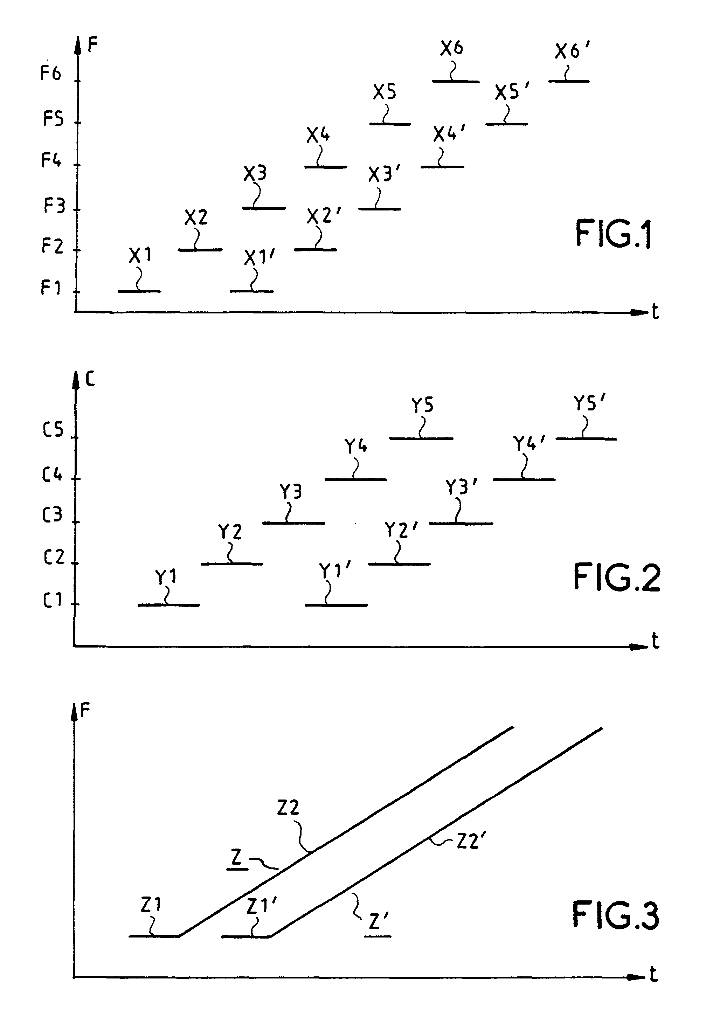

Quelques exemples de paquets remplissant les conditions énoncées ci-avant sont décrits à l'aide des figures 1 à 3 qui sont des diagrammes représentatifs de l'étalement de paquets en fonction du temps. Sur ces diagrammes les paquets sont représentés par des traits.

Dans le cas de la figure 1 I'orthogonalité est obtenue par sauts de fréquence, F1 à F6, et le diagramme montre deux paquets faits respectivement des segments X1 à X6, et X1' à X6'. Dans cet exemple les segments ont tous la même durée et ne sont pas jointifs dans le temps ; il est également possible, dans le cas des sauts de fréquence, d'avoir des segments de tailles diverses dans un même paquet et/ou des segments jointifs. Dans le cas de la figure 1 il y aurait collision entre les deux paquets si, et seulement si, leurs segments préliminaires respectifs, X1, X1', se chevauchaient au moins partiellement dans le temps ; comme il n'en est rien pour X1, X1', un émetteur qui repère le segment préliminaire X1 relatif au premier des deux paquets, se synchronise sur X1 puis modifie ses caractéristiques de réception afin de recevoir successivement les segments X2, X3, X4, X5 et X6 ; et, lorsque le segment préliminaire X1' du deuxième paquet arrive, il n'est pas repéré étant donné que le récepteur n'a pas terminé de recevoir le premier paquet et, est alors en réception sur la fréquence porteuse F3, alors que le segment préliminaire X1' est émis sur la fréquence porteuse F1.

Dans le cas de la figure 2 l'orthogonalité entre les segments est obtenue par des codes d'étalement, C1 à C5, tous orthogonaux entre eux et ce qui a été dit au sujet des fréquences dans le cas de la figure 1 est transposable aux codes dans le cas de la figure 2. La figure 2 montre deux paquets composés respectivement des segments Y1 à Y5 et Y1' à Y5' et il est à noter que, dans l'exemple représenté, les segments d'un même paquet sont tous de même longueur et jointifs dans le temps ; bien entendu ceci n'est pas une obligation et l'emploi de segments disjoints ou de durées différentes est possible, en particulier pour le segment préliminaire qui peut, par exemple, être de durée supérieure à celle des autres segments du paquet.

La figure 3 concerne une autre façon de limiter les interférences entre les paquets, qui s'apparente à celle illustrée sur la figure 1 mais en remplaçant, pour les segments autres que le segment préliminaire, les sauts de fréquence par une rampe de fréquences. Dans ce cas et pour rester dans les mêmes conditions de fonctionnement qu'aux deux cas précédents, les segments préliminaires Z1, Z1' qui comportent des informations d'identification du paquet, sont faits de plusieurs bits tous transmis sur une même fréquence porteuse; ainsi, comme d'ailleurs dans les deux cas précédents, le récepteur n'a pas à effectuer un balayage en fréquences lorsqu'il ne reçoit pas un paquet et qu'il surveille donc l'arrivée de paquets en se repérant pour cela sur leurs segments préliminaires.

Sur la figure 3 les parties des deux paquets Z, Z' qui sont transmises par rampe de fréquences, ont été repérées par les symboles Z2 et Z2'. La transmission de Z2 et Z2' correspond à la transmission selon la figure 1 avec des segments tous limités à un bit et une fréquence de transmission du segment égale à la fréquence moyenne de la porteuse lors de la transmission du segment considéré. Il est à noter que, pour un paquet, le segment préliminaire Z1, Z1' et la partie en rampe Z2, Z2' sont, dans l'exemple décrit, jointives dans le temps et jointives en fréquences; là encore ce n'est pas une obligation, un intervalle de temps pouvant séparer le segment préliminaire de la partie en rampe et/ou la partie en rampe pouvant commencer à une fréquence différente de la fréquence porteuse de transmission du segment préliminaire. Il est également possible d'effectuer la transmission en utilisant non pas une rampe à variation de fréquence linéaire dans le temps mais une rampe à variation non linéaire ou plusieurs rampes distinctes successives à variation linéaire ou non linéaire, jointives ou non dans le temps et en fréquences.

Pour améliorer l'orthogonalité entre les paquets et entre les segments d'un même paquet il est possible, par exemple dans le cas de la figure 1, d'associer un code d'étalement à chacun des paliers de fréquence en choisissant des codes d'étalement orthogonaux entre eux, au moins pour deux segments successifs quels qu'ils soient. De même, dans le cas de la figure 3, il est possible de subdiviser la partie oblique, telle que Z2, Z2', et d'associer à chaque subdivision un code d'étalement, en choisissant des codes orthogonaux entre eux, du moins pour deux subdivisions successives quelles qu'elles soient.

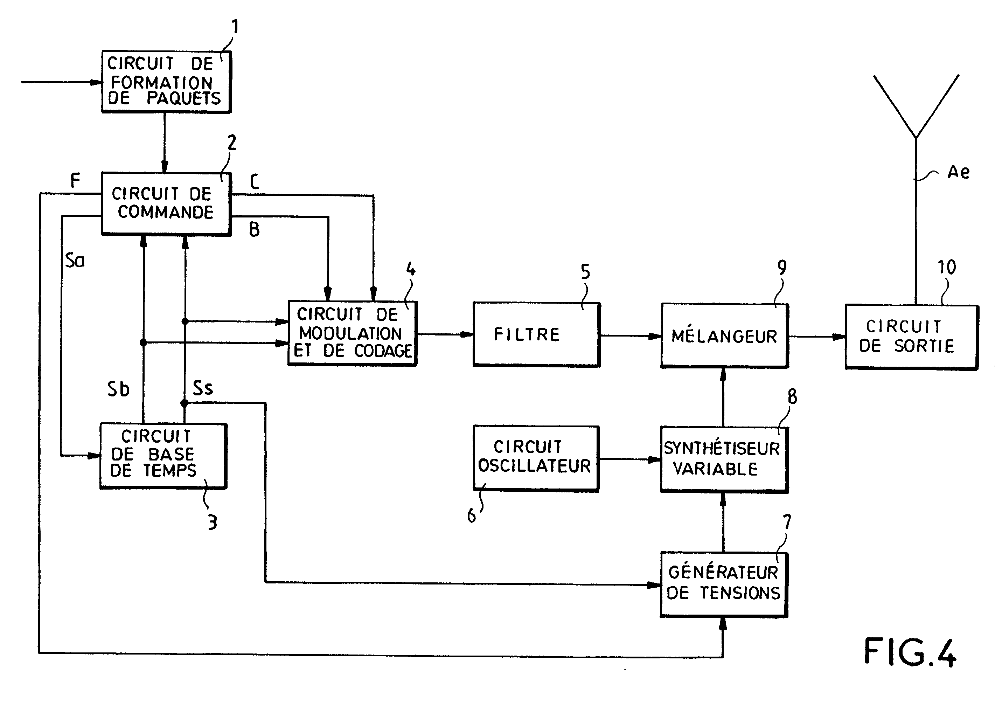

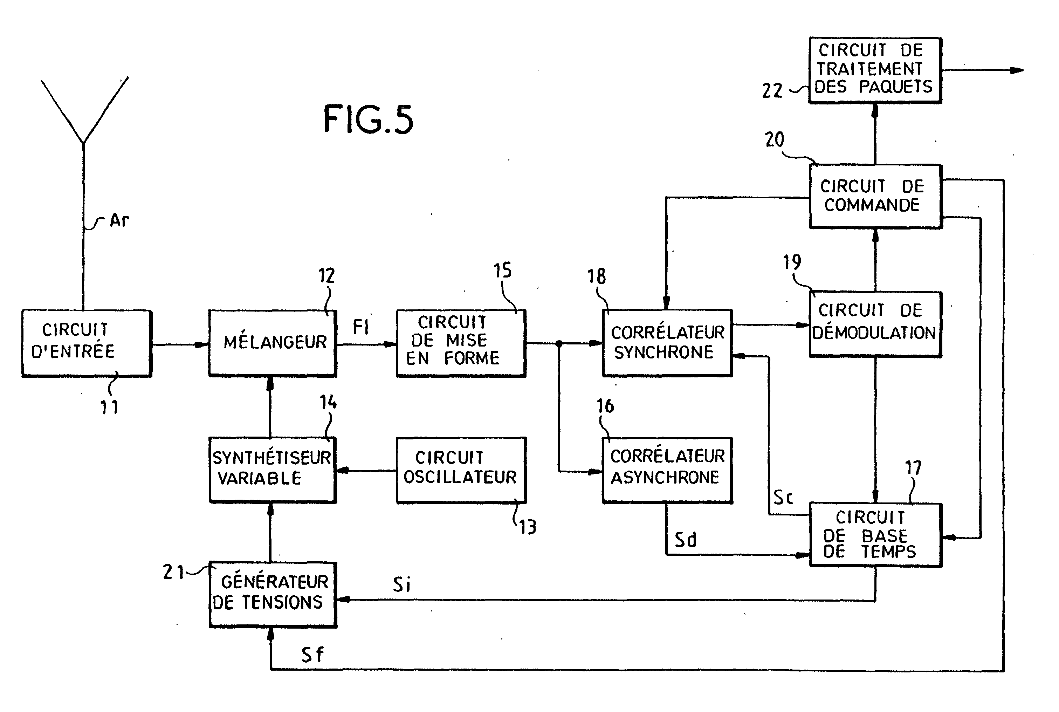

Les exemples de réalisation d'un émetteur et d'un récepteur qui vont être décrits à l'aide des figures 4 et 5, concernent des matériels pour la mise en oeuvre du procédé, qui permettent d'utiliser des changements de fréquences et de codes d'étalement lors de la transmission d'un paquet. Comme l'originalité du procédé ne réside pas dans le fait bien connu de rendre orthogonaux les paquets mais réside, en particulier comme il a été vu plus avant, dans la transmission de paquets tous de même structure et dans la façon de les repérer, les émetteurs selon la figure 4 et les récepteurs selon la figure 5 sont très voisins d'émetteurs et de récepteurs connus, dont ils se distinguent surtout au niveau de leurs protocoles de fonctionnement tels qu'ils ont été décrits dans ce qui précède ; en fait, connaissant ces protocoles, la réalisation d'un émetteur et d'un récepteur capables de les appliquer ne pose aucun problème à l'homme du métier qui, au contraire, y trouvera certaines facilités. Il a donc été possible d'éliminer, dans ce qui suit, tout ce qui relevait de la technologie courante et ne contribuait pas à la compréhension des exemples de mise en oeuvre du procédé ; les dessins en sont plus claires et l'exposé s'en trouve simplifié.

La figure 4 est un schéma électrique relatif à un émetteur pour la mise en oeuvre du procédé. Tout d'abord ce schéma sera commenté dans le cas où l'émetteur fonctionne en sauts de fréquence et avec codes d'étalement ; puis il sera indiqué comment les commentaires doivent être modifiés pour le cas où l'émetteur fonctionne en rampe de fréquences.

Les bits de données à transmettre, D, sont fournis à un circuit de formation de paquets, 1, qui, en fonction des bits qu'il reçoit, délivre des paquets à un circuit de commande 2. Le rôle du circuit 2 est d'introduire dans le paquet des informations qui, selon les besoins, peuvent être, par exemple l'adresse de l'expéditeur ou l'adresse du ou des destinataires. Son rôle est également d'organiser les opérations d'étalement des paquets par codes d'étalement et par sauts de fréquence. Un circuit de base de temps, 3, délivre les signaux de synchronisation nécessaires à ces opérations d'étalement ; le circuit 3 est déclenché par un signal Sa fourni par le circuit 2 à chaque fois qu'il désire commencer les opérations d'étalement d'un paquet.

Pour organiser les opérations d'étalement le circuit de commande 2 dispose de la liste des fréquences et des codes à utiliser ainsi que des lois d'application de ces fréquences et de ces codes, c'est-à-dire qu'il a en mémoire les caractéristiques du paquet standard dont il a été question dans ce qui précède ; il peut ainsi organiser les opérations de manière que, comme il a été vu plus avant, les caractéristiques d'étalement du paquet qui va être transmis correspondent à celles du paquet standard tronqué de même durée.

Le circuit de commande 2 reçoit du circuit de base de temps 3 des impulsions de synchronisation des bits, Sb, et de synchronisation des débuts de segments, Ss. Il peut ainsi fournir des groupes de bits, B, correspondant chacun aux bits d'un segment à émettre et, avec chaque groupe, un signal C et un signal F représentatifs respectivement du code d'étalement et de la fréquence à employer pour l'émission du groupe considéré.

Un circuit de modulation et de codage, 4, reçoit les signaux B, C et les signaux de synchronisation Sb, Ss ; il fournit un signal modulé formé de segments auxquels sont appliqués les codages déterminés par le circuit de commande 2. Après filtrage dans un filtre 5 ces segments, auxquels sont appliqués des codes d'étalement orthogonaux, arrivent sur la première entrée d'un mélangeur 9 qui reçoit sur une seconde entrée un signal à fréquence porteuse dont la valeur est déterminée, pour chaque segment, par le signal F correspondant au segment considéré. Le signal à fréquence porteuse relatif au segment qui arrive sur la première entrée du mélangeur 9 est élaboré par un synthétiseur variable 8 qui reçoit un signal à fréquence fixe fourni par un circuit oscillateur 6 et un signal de commande de sa fréquence de sortie, constitué par une tension fournie par un générateur de tensions 7 ; pour fournir cette tension le générateur 7, qui est synchronisé par les signaux Ss de synchronisation des débuts de segments, reçoit le signal F dont la valeur indique la tension à délivrer par le générateur 7 et donc la fréquence à délivrer par le synthétiseur 8.

Le mélangeur 9, en fonction des signaux qu'il reçoit sur ses deux entrées, délivre donc sur sa sortie des paquets formés de segments codés selon des codages orthogonaux entre eux, et ces segments sont, pour un même paquet, tous à des fréquences différentes.

Un circuit de sortie 10, comportant un filtre large bande en entrée et un amplificateur de puissance en sortie, reçoit le signal élaboré par le mélangeur 9 et fournit à une antenne Ae des paquets constitués par une séquence de segments avec saut de fréquence entre les segments et codage orthogonal entre tous les segments d'un même paquet.

Pour recevoir un tel paquet, il est proposé un récepteur selon la figure 5. Ce récepteur comporte une antenne de réception, Ar, reliée à un circuit d'entrée 11 comportant , en série, un préamplificateur et un filtre à large bande. Le circuit 11 est relié à la première entrée d'un mélangeur 12 qui reçoit sur une seconde entrée le signal de sortie d'un synthétiseur variable 14 ; ce synthétiseur reçoit un signal à fréquence fixe d'un circuit oscillateur 13. Le signal à fréquence intermédiaire délivré par le mélangeur 12 est mis en forme dans un circuit de mise en forme 15 qui comporte un filtre suivi d'un amplificateur avec commande automatique de gain.

Le mélangeur 12 fournit, grâce au synthétiseur 14 dont le fonctionnement sera vu plus loin, un signal à fréquence intermédiaire constante, modulé par les informations contenues dans les paquets émis par l'émetteur selon la figure 4 ; après passage dans le circuit 15 ce signal est appliqué à l'entrée de deux corrélateurs 16, 18. Le corrélateur 16 est un corrélateur asynchrone qui a pour rôle de rechercher dans son signal d'entrée les en-têtes dont il a été vu qu'ils constituaient des champs de synchronisation tous de même composition, quel que soit le paquet.

Quand un en-tête est trouvé par le corrélateur 16, un signal de début de paquet, Sd, est délivré par le corrélateur 16 à un circuit de base de temps 17 qui fournit un signal de synchronisation, Sc, au corrélateur synchrone 18. La fréquence du signal Sc, quand ce signal est déclenché par le signal Sd, correspond à la valeur théorique de la fréquence intermédiaire. Le corrélateur 18 est relié à l'entrée d'un circuit de démodulation, 19, lui-même relié à l'entrée d'un circuit de commande 20 et le circuit 20 a une sortie reliée à une entrée de commande de codes d'étalement du corrélateur synchrone 18. Les circuits 18, 19, 20 forment donc une boucle.

Le circuit de commande 20 est le pendant du circuit de commande 2 de l'émetteur selon la figure 4. Son rôle principal est d'organiser les opérations de désétalement des paquets reçus ; pour cela il dispose de la liste des fréquences et des codes utilisés ainsi que des lois d'application de ces fréquences et de ces codes. Lorsque le corrélateur asynchrone 16 trouve un en-tête, il déclenche le corrélateur synchrone 18 ; le corrélateur 18 étant réglé initialement pour effectuer un désétalement correspondant au code d'étalement appliqué à la partie du paquet qui suit immédiatement l'en-tête, peut alors, immédiatement, fournir un signal constitué de bits désétalés. Le circuit de démodulation 19 reçoit ce signal et le démodule pour le fournir au circuit de commande 20 qui, connaissant la structure du paquet standard, peut déterminer, au fur et à mesure de l'arrivée des bits, à quel segment du paquet appartient un bit et donc quels sont le code et la fréquence d'étalement correspondant ; et ainsi le circuit 20 peut commander le corrélateur synchrone 18 pour que le code de désétalement utilisé à un moment donné dans ce corrélateur, corresponde au code d'étalement du signal sur son entrée reliée à la sortie du circuit 15.

Le circuit de commande 20 peut ainsi fournir des paquets désétalés à un circuit de traitement des paquets 22 et ce dernier circuit délivre les informations contenues dans les paquets à un ou des utilisateurs destinataires.

Le circuit de démodulation 19 est relié à une entrée du circuit de base de temps 17 pour synchroniser le circuit 17 sur les bits obtenus par démodulation dans le circuit 19.

Le circuit de commande 20 peut également avoir pour rôle de lire, dans le paquet, des informations telles que l'adresse de l'expéditeur ou du destinataire du paquet, afin par exemple d'arrêter la prise en compte d'un paquet qui n'est pas destiné au récepteur. Mais surtout le circuit de commande 20 joue un rôle important, et dont il n'a pas encore été question, relativement à la commande du synthétiseur variable 14. En effet, au fur et à mesure, qu'il repère un début de segment, il fournit au circuit de base de temps 17 une impulsion de début de segment pour que le circuit 17 puisse élaborer un signal de synchronisation de début de segment Si ; le signal Si est envoyé sur une entrée d'autorisation d'un générateur de tensions 21 dont la sortie fournit une tension de commande de la fréquence du synthétiseur variable 14; la valeur de cette tension de commande est fonction de la valeur d'un signal Sf fourni au générateur 21 par le circuit de commande 20, et la valeur de Sf est modifiée par le circuit 20 au fur et à mesure de l'apparition des segments et en choisissant dans sa liste des fréquences celle qui correspond au segment reçu à un moment donné ; ainsi commandé, le synthétiseur variable 14 permet au mélangeur 12 d'assurer le désétalement en fréquence et, donc, de fournir le signal à fréquence intermédiaire constante appliqué à l'entrée du circuit de mise en forme 15.

La mise en oeuvre du procédé par rampe de fréquences, comme illustré sur le diagramme de la figure 3, et avec codes d'étalement conduit à un schéma d'émetteur qui est aussi celui de la figure 4 ; mais le générateur de tensions 7 est commandé pour délivrer une rampe de tension et le signal C, fourni par le circuit 2 pour la commande des codages, est modifié quand la rampe passe par certaines valeurs prédéterminées, connues du circuit de commande 2. Et, lorsque le procédé est mis en oeuvre avec rampe de fréquences mais sans codes d'étalement, dans le schéma de l'émetteur la liaison qui fournit le signal C est supprimée.

De même la mise en oeuvre du procédé dans une réception avec rampe de fréquences et codes d'étalement conduit à un schéma qui est celui de la figure 5 ; mais le générateur de tensions 21 est commandé pour délivrer une rampe de tension et le signal que fournit le circuit 20 au corrélateur 18 est modifié quand la rampe passe par les valeurs prédéterminées connues du circuit de commande 20. Et, lorsque le procédé est mis en oeuvre avec rampe de fréquences mais sans codes d'étalement, dans le schéma selon la figure 5 le corrélateur synchrone est supprimé et le signal de sortie du circuit de mise en forme 15 est appliqué d'une part au corrélateur asynchrone 16 et, d'autre part, directement au circuit de démodulation 19.

L'invention n'est pas limitée aux exemples décrits et concerne, par exemple, le cas où le paquet standard a ses caractéristiques qui varient avec le temps, soit de façon prédéterminée soit après échanges d'informations entre des stations munies de matériel pour la mise en oeuvre du procédé.

## Revendications

1. Procédé de transmission par paquets, sur fréquence porteuse, avec étalement-désétalement des données, les paquets ((X), (Y) ou (Z)), ((Xⁱ), (Yⁱ) ou (Zⁱ)), ...et ((Xⁿ⁻¹), (Yⁿ⁻¹) ou (Zⁿ⁻¹)):
• étant transmis entre leurs n émetteurs respectifs, où n est un entier supérieur à 1, et au moins un récepteur, et
• étant constitués de données proprement dites (D) et d'un segment préliminaire, respectivement, {(X1ⁱ), (Y1ⁱ), (Z1ⁱ)}_{i=0...(n-1)} qui précède les données proprement dites (D),
**caractérisé en ce que**, les paquets {(Xⁱ), (Yⁱ), (Zⁱ)}_{i=0...(n-1)} pouvant être de différentes durées sans toutefois dépasser une durée donnée, et considérant un paquet standard de durée au moins égale à la durée donnée, ce paquet standard ayant ses données proprement dites (D) disposées en une séquence de segments de données (D) à chacun de ces segments correspondant un étalement et un désétalement donnés, et les étalements de deux segments, quels que soient ces segments, étant orthogonaux, il consiste:
• à donner à tout paquet transmis (Xⁱ), (Yⁱ) ou (Zⁱ), avec 0 ≤ i ≤ (n-1), quelle que soit sa durée, un étalement identique à l'étalement d'un paquet standard tronqué de même durée c'est-à-dire du paquet standard limité à la durée du paquet transmis considéré (Xⁱ), (Yⁱ), ou (Zⁱ), cette durée du paquet standard tronqué, respectivement (P/Xⁱ), (P/Yⁱ) ou (P/Zⁱ), étant mesurée à partir du début du paquet standard,
• à avoir en mémoire, à la réception, les étalements du paquet standard, et
• à repérer les paquets transmis {(Xⁱ), (Yⁱ), (Zⁱ)}_{i=0...(n-1)} en surveillant la réception des seuls segments préliminaires {(X1ⁱ), (Y1ⁱ), (Z1ⁱ)}_{i=0..(n-1)}, le paquet transmis (Xⁱ), (Yⁱ) ou (Zⁱ) repéré par son segment préliminaire reçu, respectivement, (X1ⁱ), (Y1ⁱ) ou (Z1ⁱ) étant alors désétalé en fonction des étalements des segments constituant ce paquet transmis (Xⁱ), (Yⁱ) ou (Zⁱ).

2. Procédé selon la revendication 1, **caractérisé en ce que** le paquet standard est constitué de segments tous de même durée.

3. Procédé selon la revendication 1, **caractérisé en ce que** le paquet standard est constitué par le segment préliminaire suivi de segments réduits à un bit et transmis selon au moins une rampe de fréquence.

4. Emetteur pour la mise en oeuvre d'un procédé de transmission par paquets, sur fréquence porteuse, avec étalement-désétalement des données, les paquets ((X), (Y) ou (Z)), ((Xⁱ), (Yⁱ) ou (Zⁱ)), ...et ((Xⁿ⁻¹), (Yⁿ⁻¹) ou (Zⁿ⁻¹)):
• étant transmis entre leurs n émetteurs respectifs, où n est un entier supérieur à 1, et au moins un récepteur, et
• étant constitués de données proprement dites (D) et d'un segment préliminaire, respectivement, {(X1ⁱ), (Y1ⁱ), (Z1ⁱ)}_{i=0..(n-1)} qui précède les données proprement dites (D),
**caractérisé en ce qu'**il comporte:
• au moins un moyen (1,2) permettant de former des paquets (Xⁱ),(Yⁱ) ou (Zⁱ) à partir des données proprement dites (D),
• des moyens de commande d'étalement (2-9):
- ayant en mémoire les caractéristiques d'étalement d'un paquet standard de durée au moins égale à la durée du paquet à transmettre (Xⁱ), (Yⁱ) ou (Zⁱ) le plus long, ce paquet standard ayant ses données proprement dites (D) disposées en une séquence de segments de données (D) à chacun de ces segments correspondant un étalement et un désétalement donnés, et les étalements de deux segments, quels que soient ces segments, étant orthogonaux et
- élaborant l'étalement de tout paquet à transmettre (Xⁱ), (Yⁱ) ou (Zⁱ) selon les caractéristiques d'étalement du paquet standard tronqué de même durée c'est-à-dire du paquet standard limité à la durée du paquet à transmettre considéré (Xⁱ), (Yⁱ) ou (Zⁱ), cette durée du paquet standard tronqué étant mesurée à partir du début du paquet standard,
• au moins un moyen d'émission (10, Ae) émettant tout paquet à transmettre étalé (Xⁱ),(Yⁱ) ou (Zⁱ).

5. Récepteur pour la mise en oeuvre d'un procédé de transmission par paquets, sur fréquence porteuse, avec étalement-désétalement des données, les paquets ((X), (Y) ou (Z)), ((Xⁱ), (Yⁱ) ou (Zⁱ)), ...et ((Xⁿ⁻¹), (Yⁿ⁻¹) ou (Zⁿ⁻¹)) :
• étant transmis entre leurs n émetteurs respectifs, où n est un entier supérieur à 1, et au moins un récepteur, et
• étant constitués de données proprement dites (D) et d'un segment préliminaire, respectivement, {(X1ⁱ), (Y1ⁱ), (Z1ⁱ)}_{i=0.(n-1)} qui précède les données proprement dites (D),
**caractérisé en ce que**, étant donné un paquet standard de durée au moins égale à la durée du paquet transmis (Xⁱ), (Yⁱ) ou (Zⁱ) le plus long, ce paquet standard ayant ses données proprement dites (D) disposées en une séquence de segments de données (D) se succédant à partir de son segment préliminaire dont le début est le même que le début du paquet standard, à chaque segment correspondant un étalement et un désétalement donnés, et les étalements de deux segments, quels que soient ces segments, étant orthogonaux, pour recevoir des paquets transmis (Xⁱ), (Yⁱ) ou (Zⁱ) présentant un étalement identique à l'étalement du paquet standard tronqué de même durée c'est-à-dire du paquet standard limité à la durée du paquet transmis considéré (Xⁱ), (Yⁱ) ou (Zⁱ), cette durée du paquet standard tronqué étant mesurée à partir du début du paquet standard, il comporte:
• des moyens de surveillance (16) pour repérer les segments préliminaires (X1ⁱ), (Y1ⁱ) ou (Z1ⁱ) et pour déclencher (Sd) le processus de désétalement d'un paquet reçu (Xⁱ),(Yⁱ) ou (Zⁱ) quand un premier segment, respectivement, (X1ⁱ), (Y1ⁱ) ou (Z1ⁱ) est repéré, et
• des moyens de commande de désétalement (17-20) ayant en mémoire les caractéristiques d'étalement du paquet standard afin d'effectuer le désétalement de tout paquet (Xⁱ), (Yⁱ) ou (Zⁱ) reçu en fonction des caractéristiques d'étalement du paquet standard par l'émetteur.

## Claims

1. Process for packet transmission, on carrier frequency, with spreading/despreading of the data, the packets ((X), (Y) or (Z)), ((Xⁱ), (Yⁱ) or (Zⁱ)),...and ((Xⁿ⁻¹), (Yⁿ⁻¹) or (Zⁿ⁻¹)):
• being transmitted between their n respective transmitters, where n is an integer greater than 1, and at least one receiver, and
• consisting of data (D) and of a preliminary segment, respectively {(X1ⁱ), (Y1ⁱ), (Z1ⁱ)}_{i=0...(n-1)} which precedes the data (D),
**characterized in that**, the packets {(Xⁱ), (Yⁱ), (Zⁱ)}_{i=0...(n-1)} possibly being of different durations without however exceeding a given duration, and considering a standard packet of duration at least equal to the given duration, this standard packet having its data (D) arranged as a sequence of segments of data (D), to each of these segments corresponding a given spreading and despreading, and the spreadings of two segments, whatever these segments are, being orthogonal, it consists:
• in endowing each transmitted packet (Xⁱ), (Yⁱ) or (Zⁱ), with 0 ≤ i ≤ (n-1), whatever its duration is, with a spreading identical to the spreading of a truncated standard packet of the same duration, that is to say of the standard packet limited to the duration of the relevant transmitted packet (Xⁱ), (Yⁱ) or (Zⁱ), this duration of the truncated standard packet, respectively (P/Xⁱ), (P/Yⁱ) or (P/Zⁱ), being measured from the start of the standard packet,
• in having in memory, on reception, the spreadings of the standard packet, and
• in tagging the transmitted packets {(Xⁱ), (Yⁱ), (Zⁱ)}_{i=0...(n-1)} by monitoring reception of the preliminary segments {(X1ⁱ), (Y1ⁱ) or (Z1ⁱ)}_{i=0...(n-1)} alone, the transmitted packet (Xⁱ), (Yⁱ) or (Zⁱ) tagged by its preliminary segment received, respectively, (X1ⁱ), (Y1ⁱ) or (Z1ⁱ) then being despread as a function of the spreadings of the segments constituting this transmitted packet (Xⁱ), (Yⁱ) or (Zⁱ).

2. Process according to Claim 1, **characterized in that** the standard packet consists of segments all of the same duration.

3. Process according to Claim 1, **characterized in that** the standard packet consists of the preliminary segment followed by segments reduced to one bit and transmitted accoding to at least one frequency ramp.

4. Transmitter for implementing a process of packet transmission, on carrier frequency, with spreading/despreading of the data, the packets ((X), (Y) or (Z)), ((Xⁱ), (Yⁱ) or (Zⁱ)), ...and ((Xⁿ⁻¹), (Yⁿ⁻¹) or (Zⁿ⁻¹))
• being transmitted between their n respective transmitters, where n is an integer greater than 1, and at least one receiver, and
• consisting of data (D) and of a preliminary segment, respectively {(X1ⁱ), (Y1ⁱ), (Z1ⁱ)}_{i=1...(n-1)} which precedes the data (D),
**characterized in that** it comprises:
• at least one means (1, 2) making it possible to form packets (Xⁱ), (Yⁱ) or (Zⁱ) from the data (D),
• means for controlling spreading (2-9):
- having in memory the spreading characteristics of a standard packet of duration at least equal to the duration of the longest packet to be transmitted (Xⁱ), (Yⁱ) or (Zⁱ), and this standard packet having its data (D) arranged as a sequence of segments of data (D), to each of these segments corresponding a given spreading and despreading, and the spreadings of two segments, whatever these segments are, being orthogonal and
- formulating the spreading of every packet to be transmitted (Xⁱ), (Yⁱ) or (Zⁱ) according to the spreading characteristics of the truncated standard packet of the same duration, that is to say of the standard packet limited to the duration of the relevant packet to be transmitted (Xⁱ), (Yⁱ) or (Zⁱ), this duration of the truncated standard packet being measured from the start of the standard packet,
• at least one transmission means (10, Ae) transmitting every spread packet to be transmitted (Xⁱ), (Yⁱ) or (Zⁱ).

5. Receiver for implementing a process of packet transmission, on carrier frequency, with spreading/despreading of the data, the packets ((X), (Y) or (Z)), ((Xⁱ), (Yⁱ) or (Zⁱ)), ...and ((Xⁿ⁻¹), (Yⁿ⁻¹) or (Zⁿ⁻¹))
• being transmitted between their n respective transmitters, where n is an integer greater than 1, and at least one receiver, and
• consisting of data (D) and of a preliminary segment, respectively {(X1ⁱ), (Y1ⁱ), (Z1ⁱ)}_{i=0...(n-1)} which precedes the data (D),
**characterized in that**, given a standard packet of duration at least equal to the duration of the longest transmitted packet (Xⁱ), (Yⁱ) or (Zⁱ), this standard packet having its data (D) arranged as a sequence of segments of data (D) following one another from its preliminary segment whose start is the same as the start of the standard packet, a given spreading and despreading corresponding to each segment, and the spreadings of two segments, whatever these segments are, being orthogonal, so as to receive transmitted packets (Xⁱ), (Yⁱ) or (Zⁱ) exhibiting a spreading identical to the spreading of the truncated standard packet of the same duration, that is to say of the standard packet limited to the duration of the relevant transmitted packet (Xⁱ), (Yⁱ) or (Zⁱ), this duration of the truncated standard packet being measured from the start of the standard packet, it comprises
• monitoring means (16) for tagging the preliminary segments (X1ⁱ), (Y1ⁱ) or (Z1ⁱ) and for triggering (Sd) the procedure for despreading a packet received (Xⁱ), (Yⁱ) or (Zⁱ) when a first segment, respectively, (X1ⁱ), (Y1ⁱ) or (Z1ⁱ) is tagged, and
• means of controlling despreading (17-20) having in memory the spreading characteristics of the standard packet so as to perform the despreading of every packet (Xⁱ), (Yⁱ) or (Zⁱ) received as a function of the characteristics of spreading of the standard packet by the transmitter.

## Patentansprüche

1. Verfahren zur paketweisen Übertragung auf einer Trägerfrequenz mit Spreizung-Entspreizung von Daten, wobei die Pakete ((X),(Y) oder (Z)), ((Xⁱ),(Yⁱ) oder (Zⁱ)), ... und ((Xⁿ⁻¹),(Yⁿ⁻¹) oder (Zⁿ⁻¹)):
- zwischen ihren n entsprechenden Sendern, wobei n eine ganze Zahl größer als 1 ist, und wenigstens einem Empfänger übertragen werden,
- aus Daten (D) und einem jeweiligen vorhergehenden Segment {(X1ⁱ),(Y1ⁱ),(Z1ⁱ)}_{i=0...(n-1)}, das den Daten (D) vorhergeht, gebildet sind,
**dadurch gekennzeichnet, daß** es, da die Pakete {(Xⁱ),(Yⁱ),(Zⁱ)}_{i=0...(n-1)} unterschiedliche Dauern besitzen können, ohne jedoch eine gegebene Dauer zu überschreiten, und wenn ein Standardpaket mit einer Dauer, die wenigstens gleich der gegebenen Dauer ist, betrachtet wird, wobei in diesem Standardpaket dessen Daten (D) in einer Folge von Datensegmenten (D) angeordnet sind, wobei jedem dieser Segmente eine gegebene Spreizung und eine gegebene Entspreizung entspricht, wobei die Spreizungen der beiden Segmente unabhängig von diesen Segmenten zueinander senkrecht sind, darin besteht:
- jedem übertragenen Paket (Xⁱ), (Yⁱ) oder (Zⁱ) mit 0 ≤ i ≤ (n - 1) unabhängig von seiner Dauer eine Spreizung zu verleihen, die gleich der Spreizung eines abgeschnittenen Standardpakets mit derselben Dauer ist, d. h. des Standardpakets, das auf die Dauer des betrachteten übertragenen Pakets (Xⁱ), (Yⁱ) oder (Zⁱ) begrenzt ist, wobei die Dauer des abgeschnittenen Standardpakets (P/Xⁱ), (P/Yⁱ) bzw. (P/Zⁱ) ab dem Beginn des Standardpakets gemessen wird,
- beim Empfang die Spreizungen des Standardpakets zu speichern und
- die übertragenen Pakete {(Xⁱ),(Yⁱ),(Zⁱ)}_{i=0...(n-1)} zu markieren, indem der Empfang der einzelnen vorhergehenden Segmente {(X1ⁱ),(Y1ⁱ),(Z1ⁱ)}_{i-0...(n-1)} überwacht wird, wobei das übertragene Paket (Xⁱ), (Yⁱ) oder (Zⁱ), das jeweils durch sein empfangenes vorhergehendes Segment (X1ⁱ), (Y1ⁱ) oder (Z1ⁱ) markiert ist, dann in Abhängigkeit von den Spreizungen der Segmente, die dieses übertragene Paket (Xⁱ), (Yⁱ) oder (Zⁱ) bilden, zusammengezogen wird.

2. Verfahren nach Anspruch 1, **dadurch gekennzeichnet, daß** das Standardpaket aus Segmenten gebildet ist, die alle die gleiche Dauer besitzen.

3. Verfahren nach Anspruch 1, **dadurch gekennzeichnet, daß** das Standardpaket durch das vorhergehende Segment, gefolgt von Segmenten, die auf ein Bit reduziert sind und entsprechend wenigstens einer Frequenzrampe übertragen werden, gebildet ist.

4. Sender zum Ausführen eines Verfahrens zur paketweisen Übertragung auf einer Trägerfrequenz mit Spreizung-Entspreizung von Daten, wobei die Pakete ((X),(Y) oder (Z)) ((Xⁱ),(Yⁱ) oder (Zⁱ)), ... und ((Xⁿ⁻¹),(Yⁿ⁻¹) oder (Zⁿ⁻¹)):
- zwischen ihren n jeweiligen Sendern, wobei n eine ganze Zahl größer als 1 ist, und wenigstens einem Empfänger übertragen werden und
- aus Daten (D) und einem jeweiligen vorhergehenden Segment {(X1ⁱ),(Y1ⁱ),(Z1ⁱ)}_{i=0...(n-1)}, das den Daten (D) vorhergeht, gebildet sind,
**dadurch gekennzeichnet, daß** er umfaßt:
- wenigstens ein Mittel (1, 2), das die Bildung von Paketen (Xⁱ), (Yⁱ) oder (Zⁱ) anhand der Daten (D) ermöglicht,
- Mittel (2-9) zum Steuern der Spreizung:
- die in einem Speicher die Spreizungseigenschaften eines Standardpakets mit einer Dauer, die wenigstens gleich der Dauer des längsten zu übertragenden Pakets (Xⁱ), (Yⁱ) oder (Zⁱ) ist, enthalten, wobei in diesem Standardpaket seine Daten (D) in einer Folge von Datensegmenten (D) angeordnet sind, wobei jedem dieser Segmente eine gegebene Spreizung und eine gegebene Entspreizung entspricht, und die Spreizung zweier Segmente unabhängig von diesen Segmenten zueinander senkrecht sind, und
- die die Spreizung jedes zu übertragenden Pakets (Xⁱ), (Yⁱ) oder (Zⁱ) entsprechend den Spreizungseigenschaften des abgeschnittenen Standardpakets mit der gleichen Dauer, d. h. mit der Dauer des auf die Dauer des betrachteten zu übertragenden Pakets (Xⁱ), (Yⁱ) oder (Zⁱ) begrenzten Standardpakets, bilden, wobei diese Dauer des abgeschnittenen Standardpakets ab dem Beginn des Standardpakets gemessen wird,
- wenigstens ein Sendemittel (10, Ae), das jedes gespreizte zu übertragende Paket (Xⁱ), (Yⁱ) oder (Zⁱ) sendet.

5. Empfänger für die Ausführung eines Verfahrens zur paketweisen Übertragung auf einer Trägerfrequenz mit Spreizung-Entspreizung der Daten, wobei die Pakete ((X),(Y) oder Z)), ((Xⁱ),(Yⁱ) oder (Zⁱ)), ... und ((Xⁿ⁻¹),(Yⁿ⁻¹) oder (Zⁿ⁻¹)):
- zwischen ihren n jeweiligen Sendern, wobei n eine ganze Zahl größer als 1 ist, und wenigstens einem Empfänger übertragen werden und
- aus Daten (D) und einem jeweiligen vorhergehenden Segment {(X1ⁱ),(Y1ⁱ),(Z1ⁱ)}_{i=0...(n-1)}, das den Daten (D) vorhergeht, gebildet sind,
**dadurch gekennzeichnet, daß** er bei gegebenem Standardpaket mit einer Dauer, die wenigstens gleich der Dauer des längsten übertragenen Pakets (Xⁱ), (Yⁱ) oder (Zⁱ) ist, wobei in diesem Standardpaket dessen Daten (D) in einer Folge von Datensegmenten (D) angeordnet sind, die ausgehend von seinem vorhergehenden Segment, dessen Beginn mit dem Beginn des Standardpakets übereinstimmt, aufeinanderfolgen, wobei jedem Segment eine gegebene Spreizung und eine gegebene Entspreizung entspricht und wobei die Spreizungen zweier Segmente unabhängig von diesen Segmenten zueinander senkrecht sind, um die übertragenen Pakete (Xⁱ), (Yⁱ) oder (Zⁱ), die eine Spreizung aufweisen, die gleich der Spreizung des abgeschnittenen Standardpakets mit derselben Dauer ist, d. h. des Standardpakets, das auf die Dauer des betrachteten übertragenen Pakets (Xⁱ), (Yⁱ) oder (Zⁱ) begrenzt ist, zu empfangen, wobei diese Dauer des abgeschnittenen Standardpakets ausgehend vom Beginn des Standardpakets gemessen wird, versehen ist mit:
- Überwachungsmitteln (16) zum Markieren der vorhergehenden Segmente (X1ⁱ), (Y1ⁱ) oder (Z1ⁱ) und zum Auslösen des Prozesses zum Entspreizen des empfangenen Pakets (Xⁱ), (Yⁱ) oder (Zⁱ), wenn ein erstes Segment (X1ⁱ); (Y1ⁱ) bzw. (Z1ⁱ) markiert ist, und
- Mitteln (17-20) zum Steuern der Entspreizung, die im Speicher die Spreizungseigenschaften des Standardpakets enthalten, um die Entspreizung jedes empfangenen Pakets (Xⁱ), (Yⁱ) oder (Zⁱ) in Abhängigkeit von den Eigenschaften der Spreizung des Standardpakets durch den Sender auszuführen.
